# FASCICULE DE BREVET EUROPEEN

(11) **EP 2 509 870 B1**
(45) Date de publication et mention de la délivrance du brevet: **18.06.2014**
(21) Numéro de dépôt: 10801603.1
(22) Date de dépôt: 26.11.2010
(51) Int. Cl.: B64D 29/08

(54) **ENSEMBLE ARRIÈRE DE NACELLE POUR TURBORÉACTEUR**
HINTERE INSPEKTIONSKLAPPEN EINES TRIEBWERKES
ENGINE NACELLE AFT DOOR ASSEMBLY

(30) Priorité: 07.12.2009 FR 0905903
(43) Date de publication de la demande: 17.10.2012
(73) Titulaire: Aircelle, 76700 Gonfreville L'Orcher (FR)
(72) Inventeur: VAUCHEL, Guy Bernard, F-76700 Harfleur (FR); CARUEL, Pierre, F-76600 Le Havre (FR); JORET, Jean-Philippe, F-27210 Beuzeville (FR)
(74) Mandataire: Gaillarde, Frédéric F. Ch.
(86) Numéro de dépôt international: PCT/FR2010/052546
(87) Numéro de publication internationale: WO 2011/070266

(56) Documents cités:
- DE-C1- 19 702 083
- FR-A1- 2 914 020
- FR-A1- 2 916 426
- US-A- 3 541 794

## Description

La présente invention se rapporte à un ensemble arrière de nacelle pour moteur à réaction, et à une nacelle équipée d'un tel ensemble.

Un avion est mû par un ou plusieurs turboréacteurs logés chacun dans une nacelle.

Une nacelle présente généralement une structure tubulaire comprenant une entrée d'air en amont du turboréacteur, un ensemble intermédiaire destiné à entourer une soufflante du turboréacteur, un ensemble arrière pouvant intégrer des moyens d'inversion de poussée et destiné à entourer la chambre de combustion et tout ou partie des étages de compresseur et de turbine du turboréacteur, et est généralement terminée par une tuyère d'éjection dont la sortie est située en aval du turboréacteur.

Les nacelles modernes sont destinées à abriter un turboréacteur double flux apte à engendrer d'une part un flux d'air chaud (également appelé flux primaire) issu de la chambre de combustion du turboréacteur, et d'autre part un flux d'air froid (flux secondaire) issu de la soufflante et circulant à l'extérieur du turboréacteur à travers un passage annulaire, également appelé veine, formé entre une structure interne définissant un carénage du turboréacteur et une paroi interne de la nacelle. Les deux flux d'air sont éjectés du turboréacteur par l'arrière de la nacelle.

Les moyens d'inversion de poussée permettent, lors de l'atterrissage d'un avion, d'améliorer la capacité de freinage de celui-ci en redirigeant vers l'avant au moins une partie de la poussée engendrée par le turboréacteur. Dans cette phase, l'inverseur obstrue généralement la veine du flux froid et dirige ce dernier vers l'avant de la nacelle, engendrant de ce fait une contre-poussée qui vient s'ajouter au freinage des roues de l'avion.

Les moyens mis en oeuvre pour réaliser cette réorientation du flux froid varient suivant le type d'inverseur.

On connaît de la technique antérieure un ensemble arrière de nacelle pour turboréacteur, comprenant :
- un capot,
- une structure interne en forme de fuseau dont au moins la partie aval est du type O-duct et est mobile par coulissement axial entre une position de fonctionnement dans laquelle elle recouvre le générateur de gaz dudit turboréacteur et définit une veine annulaire d'air froid avec ledit capot, et une position de maintenance située en aval de ladite position de fonctionnement.

L'expression « en fuseau » signifie que la structure interne présente une zone centrale de plus fort diamètre que ses extrémités amont et aval.

L'expression « O-duct », couramment utilisée dans le domaine des nacelles pour avion, signifie que l'organe concerné (en l'occurrence, la partie aval de la structure interne) s'étend sur pratiquement toute la circonférence du générateur de gaz de l'avion.

Cette expression est utilisée par opposition à « D-duct », désignant un organe qui ne s'étend que sur la moitié de la circonférence du générateur de gaz (on parle dans ce cas également d'organe en « demi-coquille »).

Par définition, un organe en « O-duct » ne peut permettre un accès au générateur de gaz que par coulissement axial.

En pratique, en raison de la forme bombée du générateur de gaz, une structure interne en « O-duct » risque de venir buter sur celui-ci lors de son coulissement de sa position de fonctionnement vers sa position de maintenance : le déplacement aval de la structure interne est donc limité, de sorte qu'il n'est possible d'accéder à certains organes du générateur de gaz qu'en prévoyant des trappes d'accès sur cet organe.

Afin de pallier cet inconvénient, il a été prévu de séparer la structure interne en deux parties, à savoir une partie aval coulissante et une partie amont articulée ouvrante. Une telle structure est décrite dans la demande FR 2 916 426 par exemple.

Malgré ses avantages, un tel mode de réalisation présente encore quelques limitations.

Tout d'abord, la structure du capot moteur aval est tributaire du capot mobile externe de la nacelle et notamment dans le cas d'une nacelle équipée d'un dispositif d'inversion de poussée. En effet, le capot externe étant rattaché au capot interne par le biais de bielles d'entraînement de volets de blocage de l'inverseur de poussée, leurs cinématiques respectives sont intimement liées.

L'interaction entre la structure porteuse des capots de moteur et le positionnement des capots sur le moteur, dus aux déplacements différentiels du pylône avec le moteur fait que la structure de guidage en interface risque fortement de produire des changements parasites dans les structures dus à l'hyperstatisme généré par cette disposition.

Le verrouillage en partie inférieure des capots de turboréacteur oblige à avoir des découpes et des interfaces d'accrochage complexes.

La présente invention a ainsi notamment pour but de fournir un ensemble arrière de nacelle du type susmentionné permettant de pallier ces inconvénients, et notamment d'obtenir un montage isostatique, tout en conservant un accès facilité au turboréacteur lors d'opérations de maintenance.

Pour ce faire, la présente invention se rapporte à un ensemble arrière de nacelle pour turboréacteur, comprenant, d'une part, un capot externe, et d'autre part, une structure interne en forme de fuseau, ladite structure interne comportant au moins une partie aval et une partie amont montées chacune mobile entre une position de fonctionnement dans laquelle elles sont liées, recouvrant ainsi le générateur de gaz dudit turboréacteur et définissant une veine annulaire d'air froid avec ledit capot externe, et au moins une position de maintenance dans laquelle elles sont séparées l'une de l'autre de manière à permettre un accès au générateur de gaz, la partie aval étant montée mobile par coulissement axial tandis que la partie amont est mobile par ouverture vers l'extérieur d'au moins une porte, la partie aval et la partie amont étant équipées de moyens de liaison aptes à coopérer entre eux, cet ensemble étant caractérisé en ce que au moins l'une des partie aval et partie amont est équipée de moyens d'articulation présentant un débattement dans au moins une direction de manière à permettre une manoeuvre et un fonctionnement de la partie concernée sans contraintes.

Ainsi, grâce à un montage selon l'invention, l'ensemble s'affranchit des risques d'hyperstatisme.

Avantageusement, la partie amont et la partie aval sont déplaçables dans leur position de maintenance de manière indépendante l'une de l'autre.

Avantageusement encore, chacune des parties amont et aval est équipée de moyens d'articulation présentant un débattement dans au moins une direction de manière à permettre une manoeuvre et un fonctionnement de chaque partie concernée sans contraintes.

De manière préférentielle, la partie aval et la partie amont sont équipées de moyens de liaison aptes à coopérer entre eux, cet ensemble étant caractérisé en ce que les moyens de liaison sont de type couteau/gorge comprenant au moins un anneau au moins partiellement périphérique formant couteau et apte à coopérer avec une gorge correspondante de l'autre partie.

La partie amont également est équipée de moyens de liaison aptes à coopérer avec des moyens de liaison correspondant d'un carter de soufflante du turboréacteur. Ces moyens de liaison seront classiquement du type couteau/gorge.

De manière préférentielle, la partie amont comprend au moins un moyen de verrouillage de la porte.

Avantageusement, le verrou est disposé sensiblement dans un même plan que des charnières d'articulation de la partie amont.

Préférentiellement, la partie amont comprend des charnières d'articulation disposées de préférence en partie supérieure, c'est-à-dire à proximité d'une interface avec un mât d'accrochage.

Préférentiellement encore, la partie amont est équipée d'au moins une charnière de part et d'autre d'un pylône, les deux charnières étant liées par une bielle traversante.

Avantageusement, la bielle est sans contact avec des structures environnantes lorsque la partie amont est en position de fonctionnement.

Alternativement ou de manière complémentaire, la partie aval est associée à au moins un moyen de guidage monté avec un débattement vertical, notamment en amont de ladite partie aval.

Avantageusement, la partie aval est associée à au moins un moyen de guidage monté avec un débattement rotatif, notamment en aval de ladite partie aval.

Le débattement rotatif pourra notamment se faire dans un plan sensiblement longitudinal et/ou dans un plan transversal.

Avantageusement encore, la partie aval est associée à au moins un moyen de guidage présentant un angle d'inclinaison par rapport à un axe sensiblement longitudinal de l'ensemble.

De manière préférentielle, les moyens de guidage et d'articulation d'au moins une des parties aval et amont possèdent une configuration de fonctionnement dans laquelle ils présentent un jeu minimal et une configuration de maintenance dans laquelle ils présentent un jeu élargi.

Avantageusement, l'ensemble de guidage permet un dégagement amont de la partie aval.

De manière préférentielle encore, les moyens de guidage et d'articulation d'au moins une des parties aval et amont sont équipés de moyens de centrage, notamment de type pions.

Avantageusement, la partie amont et la partie aval sont équipées d'au moins un moyen de détrompage, notamment sous la forme d'une talonnette.

Avantageusement une indication visuelle de non verrouillage du capot aval par le capot amont est placée dans une zone visible par le personnel de maintenance.

La présente invention se rapporte également à une nacelle d'avion, caractérisée en ce qu'elle est équipée d'un ensemble conforme à l'une quelconque des revendications précédentes.

La présente invention sera mieux comprise à la lumière de la description détaillée qui suite en regard du dessin annexé dans lequel :
- la figure 1 est une représentation schématique d'un ensemble arrière selon l'invention.
- la figure 2 est une vue schématique en coupe longitudinale de l'ensemble de la figure 1.
- la figure 3 est une vue partielle agrandie de la jonction entre la partie amont de l'ensemble de la figure 2 et un carter de soufflante.
- la figure 4 est une vue partielle agrandie de la jonction entre la partie amont de l'ensemble de la figure 2 et la partie aval du même ensemble.
- la figure 5 est une vue partielle agrandie en coupe transversale prise au niveau d'une articulation de la partie amont de l'ensemble de la figure 1.
- la figure 6, est une représentation schématique d'un moyen de guidage de la partie arrière de l'ensemble de la figure 1.
- la figure 7 est une représentation schématique d'un moyen de détrompage sous la forme d'une talonnette.
- la figure 8 est une représentation schématique d'un moyen de centrage équipant la talonnette de la figure 7.

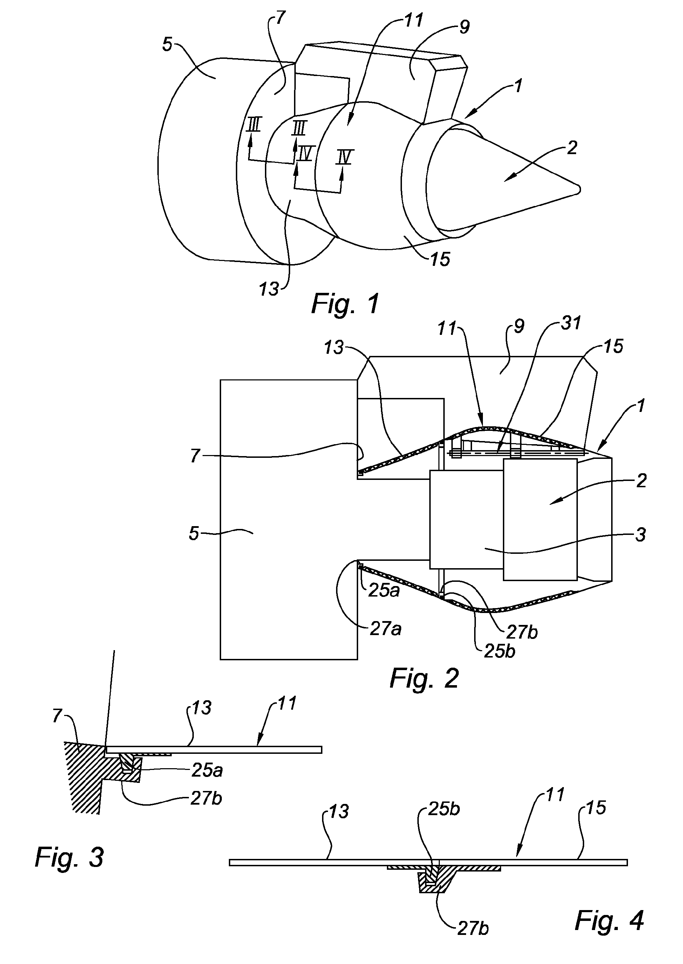

On se reporte à présent aux figures 1 à 4, sur lesquelles on a représenté diverses vues d'un ensemble arrière 1 pour un turboréacteur 2 comprenant notamment un générateur de gaz 3 et, en amont de celui-ci, une soufflante dont on peut voir un carter 5.

Un cadre avant 7, fixé en aval du carter de soufflante 5, permet de relier le moteur 1 à un pylône 9 destiné à être fixé sous une aile d'avion.

Dans cette configuration particulière, on dit que le cadre avant 7 est structurant, c'est-à-dire qu'il permet de supporter le poids de l'ensemble du turboréacteur 1, ainsi que les efforts de poussée et de contre-poussée engendrés par ce turboréacteur.

Il faut bien comprendre que la présente invention n'est nullement limitée à la présence d'un tel cadre avant structurant, et que tout moyen de fixation classique du turboréacteur 1 au pylône 9 entre également dans le cadre de la présente invention.

Une structure interne 11 de nacelle, comprenant une partie amont 13 et une partie aval 15, forme un carénage pour le générateur de gaz 3 et est reliée au pylône 9 par des moyens autorisant une cinématique appropriée qui sera décrite plus loin.

La structure interne 11 définit, avec un capot externe (non représenté), une veine annulaire d'air froid, apte à permettre la circulation d'air froid engendré par la soufflante vers l'aval de la nacelle.

Selon le type de nacelle, le capot externe pourra comprendre des moyens d'inversion de poussée, comportant typiquement une pluralité de volets susceptibles d'être actionnés par des bielles lors du coulissement du capot externe par rapport à la structure interne 11. Le fonctionnement d'un inverseur de poussée n'est pas l'objet de la présente demande et est parfaitement connu de l'homme du métier.

Classiquement, la structure interne 11 est liée au carter 5 de soufflante par le biais de la partie amont 13 par une liaison de type couteau 25a/gorge 27b (figures 2 et 3) appartenant respectivement à la partie amont 13 et au carter 5. Bien évidemment la disposition inverse ou d'autres moyens de liaison connus sont possibles.

Comme cela apparaît notamment sur les figures 2 et 4, les bords jointifs de la partie amont 13 et de la partie aval 15 de la structure interne 11, comprennent des moyens complémentaires de liaison du type à gorge 27b et à couteau 25b.

Ces liaisons pourront être complétées par au moins un joint d'étanchéité (non visible).

Ces moyens de liaison 25, 27, bloquent axialement les parties amont 13 et aval 15, l'une par rapport à l'autre et par rapport au carter 5 de soufflante.

La partie aval 15 est montée coulissante sur le pylône 9 grâce à des moyens de rail et de glissière représentés de manière symbolique par la référence 31 visible sur la figure 2.

Cette partie amont 13 comporte en fait deux demi-portes aptes à s'ouvrir vers l'extérieur, c'est-à-dire en s'éloignant du générateur de gaz 3, par pivotement autour d'axes respectifs disposés de manière sensiblement parallèle aux moyens de rail et de glissière 31 soit en partie haute de la structure amont intégrant une partie de la surface latérale du pylône (îlot) soit à l'interface îlot et tonneau.

En position de fonctionnement, les deux portes sont fermées et verrouillées à l'aide de moyens de verrouillage qui seront disposés préférentiellement en partie inférieure (c'est-à-dire à l'opposé du pylône 9) et préférentiellement placés dans le même plan que des charnières 131 d'articulation des portes. Le verrouillage vise également à assurer une pré-tension des portes autour de cerclages de verrouillage afin de permettre une tenue structurale optimale.

Cette structure particulière de la partie amont 13 diffère de celle de la partie avale 15, cette dernière étant du type «O-DUCT» tel que défini dans le préambule de la description, c'est-à-dire s'étendant sur pratiquement toute la circonférence du générateur de gaz 3.

De manière générale, la manoeuvre des parties amont 13 et aval 15 s'effectue comme suit :
on commence par ouvrir vers l'extérieur les deux portes de la partie amont 13 de la structure interne 11.

Pour maintenir ces portes en position d'ouverture, on peut envisager d'interposer une bielle de maintien s'étendant entre les deux bords inférieurs de ces portes.

L'ouverture des deux portes permet de sortir les couteaux 27b de ces ceux portes de la rainure complémentaire 25b formée dans la partie aval 15 de la structure interne 11.

A partir de là, on peut faire coulisser la partie aval 15 en aval du générateur de gaz 3, les deux portes demeurant en position ouverte.

Dans cette configuration de maintenance, on peut donc accéder facilement à la zone aval du générateur de gaz 3, ainsi qu'à une grande partie de sa zone amont.

Conformément à l'invention, les moyens d'articulation d'au moins l'une des parties aval 15 et amont 13 présentent un débattement selon au moins une direction de manière à permettre une manoeuvre et un fonctionnement de la partie concernée sans contrainte.

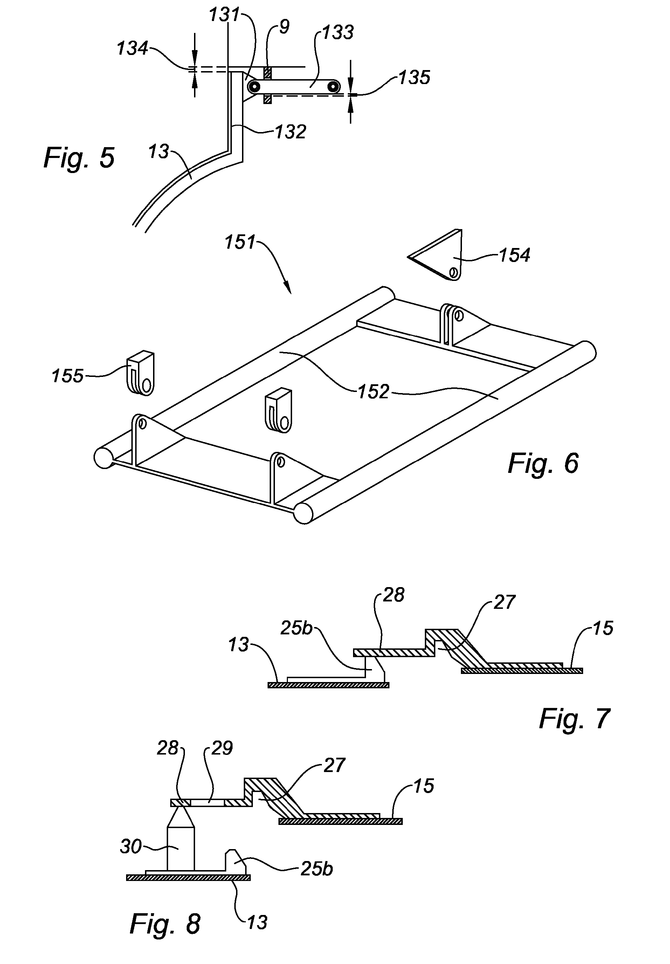

Les figures 5 et 6 illustrent des exemples de réalisation de ces moyens d'articulation respectivement pour la partie amont 13 et la partie aval 15.
La figure 5 représente un exemple d'articulation d'une porte de la partie amont 13 par une charnière 131.

Selon un mode de réalisation préférentielle, les charnières 131 d'articulation sont situées à proximité du pylône 9.

En l'espèce l'exemple représenté montre une partie amont 13 au niveau d'un ilot 132 d'interface avec le pylône 9. Cet ilot 132 d'interface est une extension d'un panneau de partie amont visant à prolonger le pylône 9 jusqu'à la partie cylindrique, également appelé tonneau, et à assurer la continuité aérodynamique. Bien évidemment, aux endroits où le pylône est suffisamment long, la partie amont 13 ne présentera pas d'ilot et ne sera constitué que du tonneau.

On notera que la ligne charnière n'est pas nécessaire parallèle à un axe sensiblement longitudinal de la nacelle.

Conformément à l'invention, les charnières 131 doivent assurer une articulation sans contraintes.

En effet, les tolérances de fabrication associées aux différences de dilatations des composants et de mouvements, ainsi qu'à la distance réduite entre un premier point de charnière et l'attache du capot amont 13 de la structure interne 11 sur le carter 5 de soufflante font qu'il est nécessaire d'aménager une cinématique de manoeuvre spécifique.

En l'espèce, l'exemple de la figure 5 montre une disposition qui permet un recentrage et un maintien de la structure 11 par rapport au pylône 9 par l'installation d'une bielle 133 traversant ledit pylône 9 pour relier deux charnières 131 de part et d'autre de celui-ci.

Un jeu 134 est également ménagé entre le capot amont 13 et le pylône 9. Ce jeu 134 est toutefois minimisé afin de garantir des performances aérodynamiques optimales. Une étanchéité non représentée permettra d'isoler la partie interne du capot 13 de la veine d'écoulement du flux secondaire. Un jeu 135 est également ménagé entre la bielle et le passage de bielle dans le pylône 9.

En position de fermeture de la partie amont 13, l'ensemble d'articulation et la bielle 133 sont donc libres, sans contact axial ni vertical avec le pylône 9. Lorsque la partie amont 13 est ouverte, le passage de bielle 133 fait office de support de bielle 133.

De la même manière, la partie aval 15 est articulée de manière à permettre un fonctionnement sans contrainte.

La partie aval 15 est centrée et positionnée par un cerclage formé avec la partie amont 13. Les tolérances de fabrication associées aux différences de dilatations des composants et de mouvements, ainsi qu'à la distance réduite entre un premier point d'attache de la glissière sur le pylône 9 et l'attache de la partie aval 15 de la structure interne 11 sur la partie amont 13 font qu'il est nécessaire d'aménager une constitution spécifique du système de coulissement.

Pour ce faire, conformément à l'invention et comme représenté sur la figure 6, le système 151 de glissières 152 permet un guidage du capot aval sans contrainte.

L'exemple représenté sur la figure 6 permet de ne pas induire de contrainte dans les structures en service.

Pour ce faire, le positionnement axial est donné par un coulisseau de la partie aval 15 sur la glissière 152 correspondante du système de guidage 15, tandis que le positionnement vertical est donné par le centrage de l'interface de cerclage porté par la partie amont 13 au niveau de sa jonction avec la partie aval 15. L'ensemble de guidage 151, à son amont, est monté libre sur au moins un support intégré à une structure fixe de l'avion tel que le pylône 9.

Plus précisément, l'ensemble de guidage 151 sera fixé au pylône 9 en amont par le biais de supports amont 155 formant oeillets et présentant une ouverture oblongue permettant un débattement vertical du support de glissière 151.

En aval, l'ensemble de guidage 151 est avantageusement relié par un point central 154 à la structure fixe de l'avion (pylône 9). Ce point permet un libre débattement autour de son point pivot. Par l'intermédiaire d'une rotule, un degré supplémentaire de débattement dans un plan transverse vertical est permis.

L'exemple de la figure 6 montre des chapes 155, 154 portées par le pylône.

Bien évidemment, la disposition peut être inversée et les chapes 154, 155 être portées par l'ensemble de guidage 151.

On notera également que des alternatives à un système rail/glissière peuvent être utilisés. On pourra également prévoir des contacts glissants ou roulants.

Des bras de liaison entre les deux glissières peuvent être ajoutés notamment en vis-à-vis de la structure de coulisseau portée par le capot de moteur aval afin de reprendre tous les efforts tendant à ouvrir la structure.

Le système de guidage 151 pourra également avoir une configuration non parallèle avec l'axe longitudinal de la nacelle et présenter un angle avec celui-ci. Le support 151 pourra rester non parallèle une fois la partie amont 13 ouverte ou se retrouver dans une position sensiblement parallèle une fois la partie amont 13 ouverte. Ceci permet de limiter encore les contraintes susceptibles de s'exercer lors du coulissement de la partie aval 15.

De manière avantageuse, on pourra également prévoir plusieurs configurations pour le système de guidage. Plus précisément, en position active, le système de guidage doit généralement comporter un jeu minimal dit fonctionnel entre le rail et la glissière tandis qu'en position ouverte, un jeu plus important facilitera la mise en place et le coulissement.

Afin de permettre une mise en place et un démontage aisé de la structure interne 11, on prévoira notamment :
- une définition de détourage de la partie amont 13 telle qu'il n'est pas nécessaire de démonter la structure interne 11 en plusieurs parties pour l'installation sur l'ensemble de guidage 151 à cause d'interférences avec des organes du turboréacteur 2. Ce détourage peut ne pas être dans un même plan ;
- l'ensemble de guidage 151 doit préférentiellement permettre d'avancer la structure interne 11 pour offrir un accès au démontage d'une virole primaire en cas de nécessité et d'assurer le dégagement de composants portés par ladite structure interne 11 et qui entreraient en interférence avec la virole primaire ;
- l'ensemble de guidage 151 pourra être équipé de butées de fin de course aval amovibles.

De manière complémentaire, il sera avantageux de prévoir un système d'assurance à la refermeture entre la partie amont 13 et la partie aval 15.

Ainsi, pour éviter une refermeture de la partie amont 13 sans prise en compte de la partie aval 15, et notamment d'une fermeture incomplète, il est avantageux de prévoir un détrompage. Sur la figure 7, un tel détrompage est représenté sous la forme d'une talonnette 28.

Dans l'exemple représenté, au moins une talonnette 28 est portée par l'anneau rainuré formant la gorge 27. La longueur de la talonnette 28 dépend de la distance considérée entre les deux parties 13, 15 de la structure interne 11 comme détectable à l'oeil et pour laquelle il n'est plus nécessaire d'assurer un détrompage.

La talonnette 28 pourra être continue, ou discrète, locale ou multiple.

On pourra également prévoir des moyens de centrage des parties amont 13 et aval 15 l'une par rapport à l'autre. Un exemple de réalisation est représenté sur la figure 8 sous la forme d'un pion de positionnement 30 apte à coopérer avec un alésage correspondant 29 ménagé dans la talonnette 28 de détrompage.

L'invention pourra également être avantageusement complétée par des moyens, notamment mécaniques, d'indication visuelle de fermeture et verrouillage.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Ensemble arrière (1) de nacelle pour turboréacteur (2), comprenant, d'une part, un capot externe, et d'autre part, une structure interne (11) en forme de fuseau, ladite structure interne comportant au moins une partie aval (15) et une partie amont (13) montées chacune mobile entre une position de fonctionnement dans laquelle elles sont liées, recouvrant ainsi le générateur de gaz dudit turboréacteur et définissant une veine annulaire d'air froid avec ledit capot externe, et au moins une position de maintenance dans laquelle elles sont séparées l'une de l'autre de manière à permettre un accès au générateur de gaz, la partie aval étant montée mobile par coulissement axial tandis que la partie amont est mobile par ouverture vers l'extérieur d'au moins une porte, la partie aval et la partie amont étant équipées de moyens de liaison (25b, 27b) aptes à coopérer entre eux, cet ensemble étant **caractérisé en ce que** au moins l'une des partie aval et partie amont est équipée de moyens d'articulation (131, 151) présentant un débattement supérieur à un jeu fonctionnel dans au moins une direction de manière à permettre une manoeuvre et un fonctionnement de la partie concernée sans contrainte.

2. Ensemble arrière (1) selon la revendication 1, **caractérisé en ce que** la partie amont (13) et la partie aval (15) sont déplaçables dans leur position de maintenance de manière indépendante l'une de l'autre.

3. Ensemble selon (1) l'une quelconque des revendications 1 ou 2, **caractérisé en ce que** chacune des parties amont (13) et aval (15) est équipée de moyens d'articulation (131, 151) présentant un débattement dans au moins une direction de manière à permettre une manoeuvre et un fonctionnement de chaque partie concernée sans contraintes.

4. Ensemble (1) selon l'une quelconque des revendications 1 à 3, **caractérisé en ce que** la partie aval (15) et la partie amont (13) sont équipées de moyens de liaison aptes à coopérer entre eux, cet ensemble étant **caractérisé en ce que** les moyens de liaison sont de type couteau (25b)/gorge (27b) comprenant au moins un anneau au moins partiellement périphérique formant couteau et apte à coopérer avec une gorge correspondante de l'autre partie.

5. Ensemble arrière (1) selon l'une quelconque des revendications 1 à 4, **caractérisé en ce que** la partie amont (13) comprend au moins un moyen de verrouillage de la porte.

6. Ensemble arrière (1) selon la revendication 5, **caractérisé en ce que** le verrou est disposé sensiblement dans un même plan que des charnières (131) d'articulation de la partie amont (13).

7. Ensemble (1) selon l'une quelconque des revendications 1 à 6, **caractérisé en ce que** la partie amont (13) comprend des charnières d'articulation (131) disposées de préférence en partie supérieure, c'est-à-dire à proximité d'une interface avec un mât d'accrochage (9).

8. Ensemble (1) selon la revendication 7, **caractérisé en ce que** la partie amont (13) est équipée d'au moins une charnière (131) de part et d'autre d'un pylône (9), les deux charnières étant liées par une bielle (133) traversante.

9. Ensemble (1) selon la revendication 8, **caractérisé en ce que** la bielle (133) est sans contact avec des structures environnantes (9) lorsque la partie amont (13) est en position de fonctionnement.

10. Ensemble (1) selon l'une quelconque des revendications 1 à 9, **caractérisé en ce que** la partie aval (15) est associée à au moins un moyen de guidage (151) monté avec un débattement vertical, notamment en amont de ladite partie aval.

11. Ensemble (1) selon l'une quelconque des revendications 1 à 10, **caractérisé en ce que** la partie aval (15) est associée à au moins un moyen de guidage (151) monté avec un débattement rotatif, notamment en aval de ladite partie aval.

12. Ensemble (1) selon l'une quelconque des revendications 1 à 11, **caractérisé en ce que** la partie aval (15) est associée à au moins un moyen de guidage (151) présentant un angle d'inclinaison par rapport à un axe sensiblement longitudinal de l'ensemble.

13. Ensemble (1) selon l'une quelconque des revendications 1 à 11, **caractérisé en ce que** les moyens de guidage et d'articulation (131, 151) d'au moins une des parties aval (15) et amont (13) possèdent une configuration de fonctionnement dans laquelle ils présentent un jeu minimal et une configuration de maintenance dans laquelle ils présentent un jeu élargi.

14. Ensemble (1) selon l'une quelconque des revendications 1 à 13, **caractérisé en ce que** au les moyens de guidage et d'articulation (131, 151) d'au moins une des parties aval (15) et amont (13) sont équipés de moyens de centrage, notamment de type pions (30).

15. Ensemble (1) selon l'une quelconque des revendications 1 à 14, **caractérisé en ce que** la partie amont (13) et la partie aval (15) sont équipées d'au moins un moyen de détrompage, notamment sous la forme d'une talonnette (28).

## Patentansprüche

1. Hintere Baugruppe (1) einer Gondel eines Triebwerks (2), umfassend einerseits eine äußere Kappe und andererseits eine innere Struktur (11) in Form einer Spindel, wobei die innere Struktur mindestens einen nachgelagerten Teil (15) und einen vogelagerten Teil (13) umfasst, die jeweils beweglich zwischen einer Betriebsposition, in der sie verbunden sind, wobei sie auf diese Weise den Gasgenerator des Triebwerks abdecken und eine ringförmige Rippe aus Kaltluft mit der aeusseren Kappe definieren, und mindestens einer Wartungsposition, in der sie voneinander getrennt sind, um einen Zugang zum Gasgenerator zu ermöglichen, montiert sind, wobei der nachgelagerte Teil beweglich durch axiales Gleiten montiert ist, während der vorgelagerte Teil durch Öffnung hin zur Außenseite mindestens einer Tür beweglich ist, wobei der nachgelagerte Teil und der vorgelagerte Teil mit Verbindungsmitteln (25b, 27b) ausgestattet sind, die ausgelegt sind, um miteinander zusammenzuarbeiten, wobei diese Baugruppe **dadurch gekennzeichnet ist, dass** mindestens einer des nachgelagerten Teils und des vorgelagerten Teils mit Gelenkmitteln (131, 151) ausgestattet ist, die einen oberen Bewegungsraum mit einem funktionalen Spiel in mindestens einer Richtung aufweisen, um eine Handhabung und einen Betrieb des betroffenen Teils ohne Einschränkung zu ermöglichen.

2. Hintere Baugruppe (1) nach Anspruch 1, **dadurch gekennzeichnet, dass** der vorgelagerte Teil (13) und der nachgelagerte Teil (15) in ihrer Wartungsposition unabhängig voneinander verschoben werden können.

3. Baugruppe (1) nach einem der Ansprüche 1 oder 2, **dadurch gekennzeichnet, dass** jeder des vorgelagerten Teils (13) und des nachgelagerten Teils (15) mit Gelenkmitteln (131, 151) ausgestattet ist, die einen Bewegungsraum in mindestens einer Richtung aufweisen, um eine Handhabung und einen Betrieb jedes betroffenen Teils ohne Einschränkungen zu ermöglichen.

4. Baugruppe (1) nach einem der Ansprüche 1 bis 3, **dadurch gekennzeichnet, dass** der nachgelagerte Teil (15) und der vorgelagerte Teil (13) mit Verbindungsmitteln ausgestattet sind, die ausgelegt sind, um miteinander zusammenzuarbeiten, wobei diese Baugruppe **dadurch gekennzeichnet ist, dass** die Verbindungsmittel vom Typ Messer (25b)/Auskehlung (27b) sind, umfassend mindestens einen Ring, der mindestens teilweise peripher ist, der ein Messer bildet und ausgelegt ist, um mit einer entsprechenden Auskehlung des anderen Teils zusammenzuarbeiten.

5. Hintere Baugruppe (1) nach einem der Ansprüche 1 bis 4, **dadurch gekennzeichnet, dass** der vorgelagerte Teil (13) mindestens ein Mittel zur Verriegelung der Tür umfasst.

6. Hintere Baugruppe (1) nach Anspruch 5, **dadurch gekennzeichnet, dass** der Riegel im Wesentlichen auf der gleichen Ebene wie Gelenkscharniere (131) des vorgelagerten Teils {13} angeordnet ist.

7. Baugruppe (1) nach einem der Ansprüche 1 bis 6, **dadurch gekennzeichnet, dass** der vorgelagerte Teil (13) Gelenkscharniere (131) umfasst, die vorzugsweise im oberen Teil angeordnet sind, d.h. in der Nähe einer Schnittstelle mit einer Aufhängesäule (9).

8. Baugruppe (1) nach Anspruch 7, **dadurch gekennzeichnet, dass** der vorgelagerte Teil (13) mit mindestens einem Scharnier (131) auf beiden Seiten eines Pylons (9) ausgestattet ist, wobei die zwei Scharniere durch eine durchlaufende Pleuelstange (133) verbunden sind.

9. Baugruppe (1) nach Anspruch 8, **dadurch gekennzeichnet, dass** die Pleuelstange (133) nicht mit umgebenden Strukturen (9) in Kontakt steht, wenn sich der vorgelagerte Teil (13) in der Betriebsposition befindet.

10. Baugruppe (1) nach einem der Ansprüche 1 bis 9, **dadurch gekennzeichnet, dass** der nachgelagerte Teil (15) mit mindestens einem Führungsmittel (151) assoziiert ist, das mit einem seitlichen Bewegungsraum montiert ist, insbesondere vorgelagert von dem nachgelagerten Teil.

11. Baugruppe (1) nach einem der Ansprüche 1 bis 10, **dadurch gekennzeichnet, dass** der nachgelagerte Teil (15) mit mindestens einem Führungsmittel (151) assoziiert ist, das mit einem drehenden Bewegungsraum montiert ist, insbesondere nachgelagert von dem nachgelagerten Teil.

12. Baugruppe (1) nach einem der Ansprüche 1 bis 11, **dadurch gekennzeichnet, dass** der nachgelagerte Teil (15) mit mindestens einem Führungsmittel (151) assoziiert ist, das einen Neigungswinkel mit Bezug auf eine im Wesentlichen längs gerichtete der Baugruppe aufweist.

13. Baugruppe (1) nach einem der Ansprüche 1 bis 11, **dadurch gekennzeichnet, dass** die Führungs- und Gelenkmittel (131, 151) mindestens eines der nachgelagerten (15) und vorgelagerten (13) Teile eine Betriebskonfiguration umfassen, in der sie ein minimales Spiel aufweisen, und eine Wartungskonfiguration, in der sie ein verlängertes Spiel aufweisen.

14. Baugruppe (1) nach einem der Ansprüche 1 bis 13, **dadurch gekennzeichnet, dass** die Führungs- und Gelenkmittel (131, 151) mindestens eines der nachgelagerten (15) und vorgelagerten (13) Teile mit Zentrierungsmitteln ausgestattet sind, insbesondere vom Typ Stifte (30).

15. Baugruppe (1) nach einem der Ansprüche 1 bis 14, **dadurch gekennzeichnet, dass** der vorgelagerte Teil (13) und der nachgelagerte Teil (15) mit mindestens einem Unverwechselbarkeitsmittel ausgestattet sind, insbesondere in der Form eines Absatzes (28).

## Claims

1. Rear assembly (1) for a turbojet engine nacelle (2), comprising, on the one hand, an outer cover, and on the other hand, a spindle-shaped inner structure (11), said inner structure including at least a downstream part (15) and an upstream part (13) each movably mounted between a operating position in which they are connected, covering thus the gas generator of said turbojet engine and defining an annular cold air vein with said outer cover, and at least a maintenance position in which they are separated from each other so as to allow access to the gas generator, the downstream part being movably mounted by axial sliding while the upstream part is movable by outward opening of at least one door, the downstream part and the upstream part being equipped with connecting means (25b, 27b) capable of cooperating with each other, this assembly being **characterized in that** at least one of the upstream part and downstream part is equipped with articulation means (131, 151) having a displacement superior to a functional clearance in at least one direction so as to allow an operation and a functioning of the concerned part without constraints.

2. The rear assembly (1) according to claim 1, **characterized in that** the upstream part (13) and the downstream part (15) are displaceable in their maintenance position independently from one another.

3. The assembly (1) according to any one of claims 1 or 2, **characterized in that** each of the upstream (13) and downstream (15) parts is equipped with articulation means (131, 151) having a displacement in at least one direction to allow an operation and a functioning of each concerned part without constraints.

4. The assembly (1) according to any one of claims 1 to 3, **characterized in that** the downstream part (15) and the upstream part (13) are equipped with connecting means capable of cooperating with each other, this assembly being **characterized in that** the connecting means are of knife (25b)/groove (27b) type comprising at least one ring at least partially peripheral forming a knife and capable of cooperating with a corresponding groove of the other part.

5. The rear assembly (1) according to any one of claims 1 to 4, **characterized in that** the upstream part (13) comprises at least one locking means of the door.

6. The rear assembly (1) according to claim 5, **characterized in that** the lock is substantially disposed in the same plane as the articulation hinges (131) of the upstream part (13).

7. The assembly (1) according to any one of claims 1 to 6, **characterized in that** the upstream part (13) comprises articulation hinges (131) preferably disposed in the upper part, that is close to an interface with an attachment strut (9).

8. The assembly (1) according to claim 7, **characterized in that** the upstream part (13) is equipped with at least one hinge (131) on either side of a pylon (9), the two hinges being linked by a through connecting rod (133).

9. The assembly (1) according to claim 8, **characterized in that** the connecting rod (133) is not in contact with the surrounding structures (9) when the upstream part (13) is in the operating position.

10. The assembly (1) according to any one of claims 1 to 9, **characterized in that** the downstream part (15) is associated with at least one guide means (151) mounted with a vertical displacement, in particular upstream of said downstream part.

11. The assembly (1) according to any one of claims 1 to 10, **characterized in that** the downstream part (15) is associated with at least one guide means (151) mounted with a rotary displacement, in particular downstrea of said downstream part.

12. The assembly (1) according to any one of claims 1 to 11, **characterized in that** the downstream part (15) is associated with at least a guide means (151) having a tilt angle relative to a substantially longitudinal axis of the assembly.

13. The assembly (1) according to any one of claims 1 to 11, **characterized in that** the guide and articulation means (131, 151) of at least one of the downstream (15) and upstream (13) parts have an operating configuration in which they have a minimal clearance and a maintenance configuration in which they have a widened clearance.

14. The assembly (1) according to any one of claims 1 to 13, **characterized in that** the guide and articulation means (131, 151) of at least one of the downstream (15) and upstream (13) parts are equipped with centering means, in particular of pin type (30).

15. The assembly (1) according to any one of claims 1 to 14, **characterized in that** the upstream part (13) and the downstream part (15) are equipped with at least a keying means, in particular in the shape of a heel-piece (28).
